Europäisches Patentamt

European Patent Office

Office européen des brevets

(11) Numéro de publication: **0 095 802**
**B1**

(12) **FASCICULE DE BREVET EUROPEEN**

(45) Date de publication du fascicule du brevet: **02.09.87**

(51) Int. Cl.⁴: **G 01 N 1/22,** G 01 N 1/24

(21) Numéro de dépôt: **83200710.8**

(22) Date de dépôt: **19.05.83**

(54) **Perfectionnements aux dispositifs de prélèvement d'échantillons gazeux.**

(30) Priorité: **28.05.82 BE 6047658**

(43) Date de publication de la demande:
**07.12.83 Bulletin 83/49**

(45) Mention de la délivrance du brevet:
**02.09.87 Bulletin 87/36**

(84) Etats contractants désignés:
**AT DE FR GB IT LU NL**

(56) Documents cités:
**BE-A- 633 848**
**BE-A- 845 879**
**FR-A-2 127 793**
**FR-A-2 323 998**

(73) Titulaire: **CENTRE DE RECHERCHES METALLURGIQUES CENTRUM VOOR RESEARCH IN DE METALLURGIE Association sans but lucratif**
**Vereniging zonder winstoogmerk Rue Montoyer, 47**
**B-1040 Bruxelles (BE)**

(72) Inventeur: **Ramelot, Daniel Léon**
**8, rue du Champay**
**B-4310 Saint-Nicolas Liège (BE)**

(74) Mandataire: **Lacasse, Lucien Emile**
**CENTRE DE RECHERCHES METALLURGIQUES**
**Abbaye du Val-Benoît 11, rue Ernest Solvay**
**B-4000 Liège (BE)**

Courier Press, Leamington Spa, England.

# Description

La présente invention concerne un dispositif perfectionné destiné au prélèvement d'échantillons gazeux.

Ce dispositif convient plus particulièrement pour prélever des échantillons de gaz fortement chargés de poussières et/ou d'humidité, tels que les fumées dégagées par les convertisseurs d'aciérie à l'oxygène.

Dans les dispositifs de prélèvement connus, la haute teneur en poussières de gaz prélevés (en moyenne 100 g/m³) provoque de fréquents colmatages des conduites de prélèvement et des filtres.

Le brevet BE—A—845.879 décrit une installation d'analyse de gaz comportant deux sondes de prélèvement et équipée d'un dispositif de purgeage et de commutation automatiques de sondes.

Selon ce brevet, le purgeage et la commutation automatiques de sondes sont effectués suivant un programme déterminé. Ce programme ne tient cependant pas compte de la situation réelle des sondes, en particulier de leur degré de colmatage, et les deux opérations précitées ne se déroulent donc pas automatiquement et systématiquement au moment le plus adéquat.

Par ailleurs, la nécessité d'assurer un temps de réponse court conduit à installer les dispositifs de prélèvement et d'analyse des gaz aussi près que possible des sites de prélèvement. Ces dispositifs sont dès lors souvent exposés à des températures élevées, à des atmosphères fortement poussiéreuses et quelquefois à des émanations corrosives.

Ces conditions sont extrêmement préjudiciables, non seulement aux appareils, qui doivent subir des entretiens et des décolmatages fréquents, mais également au personnel qui doit procéder à ces opérations.

On connaît par le brevet FR—A—2.127.793 un dispositif de prélévment d'échantillons gazeux, dans lequel un bloc de filtrage compact est fixé directement, par vissage, sur la sonde de prélèvement, les éléments de filtrage constituant ce bloc étant disposés en série l'un derrière l'autre, à une faible distance l'un de l'autre.

Toutefois, en cas d'incident impliquant un ou plusieurs éléments de cette installation, il est nécessaire de démonter l'ensemble du bloc de filtrage et de le remplacer par un bloc de réserve. En outre, l'inspection de la sonde, ainsi que son nettoyage éventuel à l'aide d'un fil métallique, exigent également le démontage du bloc de filtrage et d'un des éléments filtrants.

La présente invention a pour objet un dispositif de prélèvement d'échantillons gazeux qui permet de remédier aux divers inconvénients des systèmes connus mentionnés ci-dessus.

La présente invention porte ainsi sur un dispositif de prélèvement d'échantillons gazeux, en particulier de gaz fortement chargés en poussières et/ou en humidité, comprenant:

— au moins deux sondes de prélèvement d'échantillons gazeux, associées à un circuit de commutation desdites sondes,

— au moins un sous-ensemble de filtrage des échantillons gazeux, associé à au moins une desdites sondes, ledit sous-ensemble étant disposé à l'extrémité de sortie des échantillons gazeux de la sonde à laquelle il est associé,

— un ensemble de conditionnement et d'analyse des échantillons gazeux prélevés, relié à toutes les sondes de prélèvement et situé à une distance aussi courte que possible de tous les sites de prélèvement,

et caractérisé en ce qui un caisson (2) est disposé à l'extrémité de sortie d'une sonde de prélèvement (1), en ce que ledit caisson présente la forme générale d'un tronc de prisme de section rectangulaire dont les bases ne sont pas perpendiculaires aux génératrices du tronc de prisme, en ce que la sonde de prélèvement est montée sur une des faces latérales dudit caisson, et en ce que les fitres (3, 4) constituant le sous-ensemble de filtrate associé à ladite sonde de prélèvement sont montés respectivement sur les bases dudit caisson.

Egalement selon l'invention, les deux bases du caisson ne sont perpendiculaires à aucune des faces latérales tronc de prisme.

A cet égard, il a été trouvé avantageux de donner aux deux bases de tronc de prisme une inclinaison telle que les filtres qui y sont adaptés présentent également une inclinaison suffisante pour assurer l'évacuation des poussières lors d'un changement de cartouche filtrante, quelle que soit l'orientation de la sonde de prélèvement dans la conduit de gaz (de 0° à 90°).

Il est intéressant de signaler également que le caisson conforme à l'invention peut, grâce à sa forme particulière et malgré son volume limité, accueillir les électrovannes assurant la commutation et le décolmatage des circuits de prélèvement.

Enfin, le caisson conforme à l'invention est avantageusement pourvu de moyens permettant un ringardage axiale de la sonde, sans nécessiter le démontage du caisson.

Dans une mise en oeuvre intéressante de l'invention, chaque sonde de prélèvement est associée à un circuit comprenant un sous-ensemble de filtrage fixé à un caisson décrit plus haut, et une pompe.

D'une facon, connue en soi, le sous-ensemble de filtrage comprend un préfiltre à haute capacité et un filtre secondaire disposés en série dans le circuit des gaz.

De même, les filtres sont avantageusement pourvus de moyens de chauffage, notamment électriques, destinés à améliorer la tenue des cartouches filtrantes et à éviter les condensations d'eau.

Il va de soi que les caractéristiques des cartouches filtrantes utilisées (matériau, finesse de filtration) peuvent être choisies de façon à assurer la meilleure solution pour chaque problème particulier.

Comme on l'a indiqué plus haut, les sondes de prélèvement sont associées à un circuit de commutation des dites sondes. Ce circuit de commutation, de préférence automatique, doit veiller à ce qu'il y ait toujours un circuit de prélèvement en service, même en cas de colmatage d'un autre circuit de prélèvement.

Dans le cadre de la présente invention, ce dispositif de commutation n'assure pas la commutation des sondes suivant un programme déterminé, mais son fonctionnement est basé sur la détection d'un colmatage dans le circuit de prélèvement en service.

A cet effet, le dispositif de l'invention comporte un détecteur de colmatage relié d'une part aux circuits de prélèvement et d'autre part au dispositif de commutation des sondes de prélèvement.

Dès qu'il détecte un colmatage dans le circuit de prélèvement en service, le détecteur commande l'intervention du dispositif de commutation qui assure alors la mise en service de l'autre circuit de prélèvement, de façon à avoir en permanence un seul circuit en service par point de prélèvement.

Enfin, le dispositif de l'invention peut également comporter des moyens pour purger le circuit de prélèvement colmaté.

Ces moyens comprennet avantageusement un dispositif d'insufflation, d'un gaz comprimé, à contre-courant dans le circuit colmaté, sous la forme d'insufflations répétées et de courte durée.

Les différents ensembles de prélèvement sont reliés à un ensemble de conditionnement et d'analyse des échantillons prélevés, situé à une distance aussi courte que possible de tous les sites de prélèvement.

En combinaison avec le présent dispositif de prélèvement, il est intéressant d'utiliser un ensemble d'analyse comportant des analyseurs infrarouges, par exemple pour le CO et le $CO_2$, un analyseur paramagnétique, notamment pour l'$O_2$ et un analyseur à conductibilité thermique, en particulier pour le $H_2$. Ces divers analyseurs sont avantageusement connectés à un dispositif de correction des dérives et des interférences entre plusieurs éléments.

De même, l'ensemble d'enregistrement et de signalisation est avantageusement composé de:
— deux enregistreurs continus bicourbes, permettant de mettre à la disposition de l'opérateur les analyses notamment du CO, $CO_2$, $O_2$ et $H_2$ des fumées;
— en enregistreur continu assurant l'affichage de la vitesse de décarburation, calculée par exemple à partir des analyses du CO et du $CO_2$ et de la mesure du débit des fumées;
— un dispositif de surveillance de la teneur en hydrogène des fumées, avec alarme sonore lorsque cette teneur en $H_2$ dépasse une valeur prédéterminée, par exemple 6%, et/ou arrêt automatique de soufflage d'oxygène dans le convertisseur en service, suivi d'une injection d'azote dans les fumées à la cheminée, lorsque cette teneur en $H_2$ dépasse une certaine valeur, généralement supérieure la valeur citée plus haut, par exemple 18%.

Le dispositif qui vient d'être décrit peut être adapté à de nombreuses applications dans lesquelles le prélèvement et l'analyse continus d'échantillons de gaz fortement chargés de poussières constituent un moyen important de contrôle de la marche d'un procédé.

A titre d'exemple, le dispositif de l'invention est illustré par les figures annexées qui, il faut le souligner, ne présentent aucun caractère limitatif.

La figure 1 illustre, de façon détaillée, le circuit des gaz correspondant à un seul point de prélèvement d'échantillons de gaz.

La figure 2 montre un mode de réalisation d'un ensemble sonde-filtres conforme à l'invention.

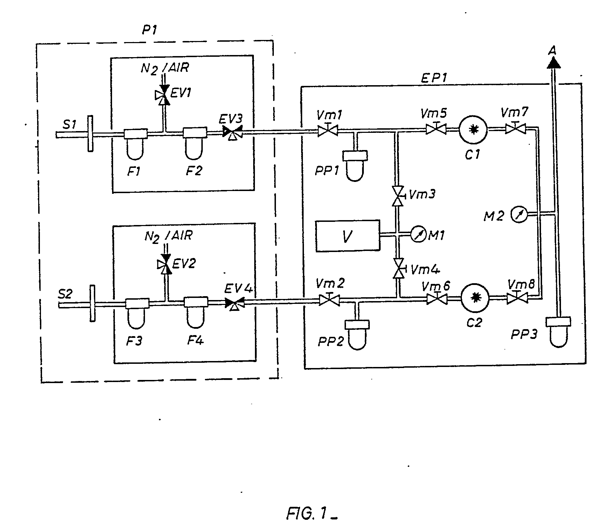

Le dispositif de la figure 1 comprend l'ensemble de prélèvement P1 et l'ensemble électropneumatique EP1 destiné à détecter les colmatages et à commuter automatiquement les sondes. L'ensemble de prélèvement P1 comprend deux sondes S1 et S2, chaque sonde étant reliée à un circuit de filtrage et de commutation. Il n'y a, à tout moment, qu'une seule sonde en service. Le circuit de la sonde S1 est composé, dans ce cas, d'un préfiltre F1 et d'un filtre secondaire F2. Entre ces deux filtres est prévue, via une électrovanne EV1, une alimentation en azote ou en air sous pression, destinée à assurer la purge et/ou le décolmatage de la sonde S1 et/ou des filtres F1—F2. Le gaz prélevé est transmis, via une électrovanne EV3 à l'ensemble électropneumatique EP1, puis à l'ensemble d'analyse A. S' il se produit un colmatage de la sonde en service, S1 par exemple il apparaît dans le circuit correspondant une dépression qui, à partir d'une valeur prédéterminée, commande la fermeture de l'électrovanne EV3, l'ouverture de l'électrovanne EV4 pour mettre la sonde S2 en service, ainsi que l'ouverture de l'électrovanne EV1 pour provoquer le décolmatage de la sonde S1 ou du filtre F1 par introduction, à contre-courant, d'air ou d'azote sous pression. Si la sonde S2, équipée d'un circuit identique, subit à son tour un colmatage, la sonde S1 (décolmatée) se remet automatiquement en service par une opération analogue. L'ensemble EP1 comporte encore les pompes C1 et C2 assurant l'aspiration des gaz, ainsi que divers pots de purge (PP) destinés à recueillir les condensats éventuels.

Le fonctionnement du dispositif de prélèvement selon l'invention peut être entièrement automatique.

Dans ce cas, un ensemble sonde-filtres-pompe est automatiquement mis en service lorsque débute un dégagement de gaz, par exemple lorsqu'une opération d'affinage par soufflage d'oxygène commence. Si, au cours de celle-ci, un colmatage de cet ensemble est détecté, par exemple par un vacuostat V, le prélèvement est automatiquement commuté sur le second ensemble sonde-filtres-pompe et une purge du premier ensemble est effectué à l'aide d'azote ou d'air comprimé, selon la procédure expliquée plus haut.

En fin de soufflage, les deux ensembles sonde-filtres sont pareillement purgés. Lorsqu'une nouvelle opération commence, le dispositif de prélèvement se positionne automatiquement sur l'ensemble sonde-filtres-pompe qui n'était pas en service à la fin de l'opération précédente.

Le dispositif de l'invention peut également être commandé manuellement; la sélection de la sonde et/ou de la pompe à mettre en service est alors effectuée à l'aide des vannes manuelles référencées Vm1 à Vm8 à la figure 1.

En raison des conditions sévères régnant dans les installations industrielles, en particulier sur le plancher des aciéries, il est particulièrement intéressant de loger les ensembles électropneumatiques, tels que EP1, dans des armoires étanches aux poussières et aux projections d'eau.

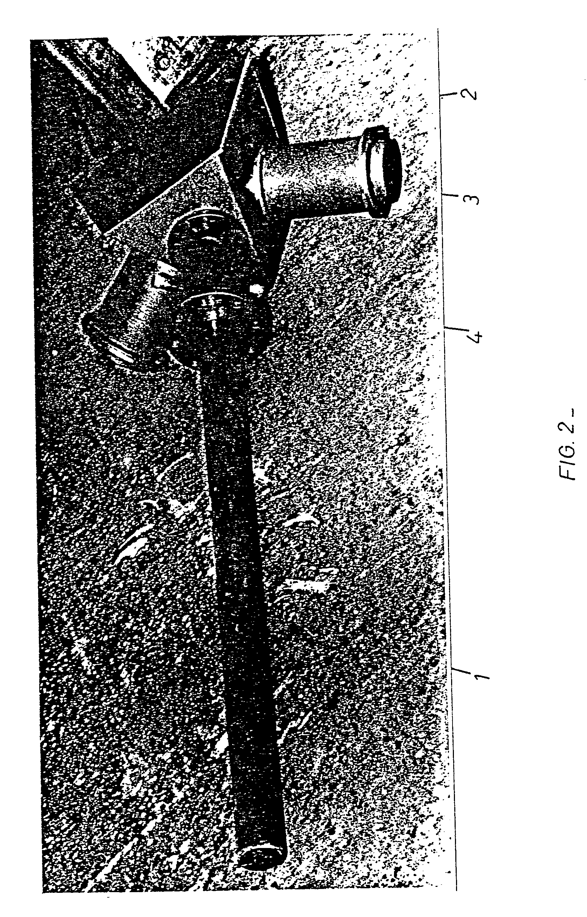

La figure 2 illustre un mode de réalisation de l'ensemble sonde-filtres selon l'invention. Cet ensemble est constitué d'une sonde 1, à l'extrémité de laquelle est fixé un caisson 2 en forme de tronc de prisme. La sonde est fixée sur une des faces latérales, de forme trapézoïdale. Le caisson 2 porte également un préfiltre 3 et un filtre secondaire 4 qui constituent l'ensemble de filtrage. Selon l'invention, ces filtres sont disposés immédiatement à la sortie de la sonde, afin de supprimer les risques de colmatage de conduites de grande longueur.

## Revendications

1. Dispositif de prélèvement d'échantillons gazeux, en particulier de gaz fortement chargés en poussières et/ou en humidité, comprenant:

— au moins deux sondes ($S_1$; $S_2$) de prélèvement d'échantillons gazeux, associées à un circuit de commutation des dites sondes,

— au moins un sous-ensemble de filtrage ($F_1$, $F_2$; $F_3$, $F_4$) des échantillons gazeux, associée à au moins une desdites sondes, ledit sous-ensemble étant disposé à l'extrémité de sortie des échantillons gazeux de la sonde à laquelle il est associé,

— un ensemble de conditionnement et d'analyse des échantillons gazeux prélevés, relié à toutes les sondes de prélèvement et situé à une distance aussi courte que possible de tous les sites de prélèvement,

caractérisé en ce qu'un caisson (2) est disposé à l'extrémité de sortie d'une sonde de prélèvement (1), en ce que ledit caisson présente la forme générale d'un tronc de prisme de section rectangulaire dont les bases ne sont pas perpendiculaires aux génératrices du troc de prisme, en ce que la sonde de prélèvement est montée sur une des faces latérales dudit caisson, et en ce que les filtres (3, 4) constituent le sous-ensemble de filtrage associé à ladite sonde de prélèvement sont montés respectivement sur les bases dudit caisson.

2. Dispositif suivant revendication 1, caractérisé en ce que les bases du caisson (2) ne sont perpendiculaires à aucune des faces latérales du tronc de prismé.

3. Dispositif suivant l'une ou l'autre des revendications 1 et 2, caractérisé en ce que chaque sonde de prélèvement est associée à un circuit comprenant un sous-ensemble de filtrage fixé à un caisson (2) et une pompe.

4. Dispositif suivant l'une ou l'autre des revendications 1 à 3, caractérisé en ce que chaque sous-ensemble de filtrage se compose d'un préfiltre à haute capacité et d'un filtre secondaire, disposés en série dans le circuit des gaz.

5. Dispositif suivant l'une ou l'autre des revendications 1 à 4, caractérisé en ce qu'il comporte un détecteur de colmatage relié d'une part aux circuits de prélèvement et d'autre part au dispositif de commutation des sondes de prélèvement.

6. Dispositif suivant l'une ou l'autre des revendications 1 à 5, caractérisé en ce qu'il comporte des moyens pour purger le circuit de prélèvement colmaté.

7. Dispositif suivant la revendication 6, caractérisé en ce que les dits moyens comprennent un dispositif d'insufflation d'un gaz comprimé, à contre-courant dans le circuit colmaté, en particulier sous la forme d'insufflations répétées et de courte durée.

## Patentansprüche

1. Gerät zur Entnahme von Gasproben, besonders von stark mit Stäuben und/oder Feuchtigkeit belastetem Gas, mit:

mindestens zwei, einem Kreis zum Schalten der besagten Sonden zugeordneten Sonden ($S_1$; $S_2$) zur Enthame von Gasproben,

mindestens einer, mindestens einer der besagten Sonden zugeordneten Filtrieruntergruppe ($F_1$, $F_2$; $F_3$, $F_4$) für die Gasproben, wobei die besagte Untergruppe am Austritts-Ende der Gasproben von der ihr zugeordneten Sonde angeordnet ist.

einermit allen Entnahmesonden verbundenen und so nahe wie möglich zu allen Entnahmeorten befindlichen Baugruppe zur Konditionierung und Analyse der entnommenen Gasproben, dadurch gekennzeichnet, dass ein Kasten (2) am Austritts-Ende einer Entnahmesonde (1) angeordnet ist, dass der besagte Kasten die allgemeine Form eines Prismenstumpfes mit rechteckigem Querschnitt besitzt, dessen Böden nicht senkrecht zu den Mantellinien des Prismenstumpfes stehen, und dass die Entnahmesonde auf einer der Seitenflächen des besagten Kastens angebracht ist, und dass die, die der besagten Entnahmesonde zugeordnete Filtrieruntergruppe bildenden Filter (3, 4) jeweils auf den Böden des besagten Kastens angebracht sind.

2. Gerät nach Anspruch 1, dadurch gekennzeichnet, dass die Böden des Kastens (2) zu keiner der Seitenflächen des Prismenstumpfes senkrecht stehen.

3. Gerät nach einem der Ansprüche 1 und 2, dadurch gekennzeichnet, dass jede Entnahmeprobe einem Kreis zugeordnet ist, der eine an einem Kasten (2) befestigte Filtrieruntergruppe und eine Pumpe umfasst.

4. Gerät nach einem der Ansprüche 1 bis 3, dadurch gekennzeichnet, dass jede Filtrieruntergruppe aus einem Vorfilter hoher Kapazität und einem Sekundärfilter besteht, die in Reihe in dem Gaskreis angeordnet sind.

5. Gerät nach einem der Ansprüche 1 bis 4, dadurch gekennzeichnet, dass es einen Verstopfungsdetektor umfasst, der einmal mit den Entnahmekreisen und andererseits mit der Schaltvorrichtung für die Entnahmesonden verbunden ist.

6. Gerät nach einem der Ansprüche 1 bis 5, dadurch gekennzeichnet, dass es Mittel zum Reinigen des verstopften Entnahmekreises umfasst.

7. Gerät nach Anspruch 6, dadurch gekennzeichnet, dass das besagte Mittel eine Vorrichtung zum Einblasen eines Druckgases im Gegenstrom in den verstopften Kreis, besonders in der Form von wiederholten und kurzzeitigen Einblasungen, umfasst.

**Claims**

1. Device for taking gas samples, in particular of gases having a high content of dust and/or of moisture, the device comprising:

at least two probes ($S_1$; $S_2$) for taking gas samples, associated with a circuit for switching the said probes,

at least one subassembly for filtering ($F_1$, $F_2$; $F_3$, $F_4$) the gas samples, which is associated with at least one of the said probes, the said subassembly being disposed at the gas sample outlet end of the probe with which it is associated,

an assembly for conditioning and analysing the gas samples taken, which is connected to all the sampling probes and situated at a distance as short as possible from all the sampling locations,

characterized in that a box (2) is disposed at the outlet end of one sampling probe (1), in that the said box exhibits the general shape of a truncated prism of rectangular cross-section, the bases of which are not perpendicular to the generatrices of the truncated prism, in that the sampling probe is mounted on one of the lateral faces of the said box, and in that the filters (3, 4) constituting the filtering subassembly associated with the said sampling probe are mounted respectively on the bases of the said box.

2. Device according to Claim 1, characterized in that the bases of the box (2) are not perpendicular to any of the lateral faces of the truncated prism.

3. Device according to either one of Claims 1 and 2, characterized in that each sampling probe is associated with a circuit comprising a filtering subassembly fixed to a box (2) and a pump.

4. Device according to any one of Claims 1 to 3, characterized in that each filtering subassembly comprises a high-capacity prefilter and a secondary filter, which are disposed in series in the gas circuit.

5. Device according to any one of Claims 1 to 4, characterized in that it includes a blockage detector connected on the one hand to the sampling circuits and on the other hand to the device for switching the sampling probes.

6. Device according to any one of Claims 1 to 5, characterized in that it includes means for flushing out the blocked sampling circuit.

7. Device according to Claim 6, characterized in that the said means comprise a device for blowing in a compressed gas, in countercurrent in the blocked circuit, in particular in the form of repeated and short-duration operations of blowing in.

FIG. 1 _

1

FIG. 2 _

0 095 802